# EUROPEAN PATENT APPLICATION

(11) **EP 3 477 937 A1**
(43) Date of publication of application: **01.05.2019**
(21) Application number: 17201279.1
(22) Date of filing: 13.11.2017
(51) Int. Cl.: H04N 5/232, B60R 1/00, H04N 5/247

(54) **MULTIPLE CAMERA CONTROL SYSTEM AND METHOD FOR CONTROLLING OUTPUT OF MULTIPLE CAMERA IMAGE**

(30) Priority: 25.10.2017 CN 201711014755
(71) Applicant: Hyundai Motor Company, Seoul 06797 (KR); Kia Motors Corporation, Seoul 06797 (KR)
(72) Inventor: Kim, Jeong Hoon, 18280 Gyeonggi-do (KR); Song, Rui, Shandong (CN); Qu, Shao Bo, Shandong (CN); Xu, Ming Xia, Shandong (CN); Kong, Sukku, 18280 Gyeonggi-do (KR); Song, Qian Qian, Shandong (CN)
(74) Representative: Hoffmann Eitle

(57) **Abstract**

A multiple camera control system includes at least two cameras shooting an image outside the vehicle when an ignition of the vehicle is turned on or a shift speed stage of the vehicle is a reverse speed stage, and an image output apparatus receiving the shot image from the cameras and selectively displaying the image received from the cameras according to a traveling direction indication signal of the vehicle and a shift speed stage information of the vehicle.

## Description

### CROSS-REFERENCE TO RELATED APPLICATION

This application claims under 35 U.S.C. §119(a) the benefit of Chinese Patent Application No. 201711014755.7 filed in the Chinese Intellectual Property Office on October 25, 2017, the entire contents of which are incorporated herein by reference.

### BACKGROUND

### (a) Technical Field

The present invention relates to a multiple camera control system and a control method of a multiple camera image output.

### (b) Description of the Related Art

Various kinds of vehicle driver assistance systems (DASs) have been equipped in vehicles to provide convenience and safety of driving to a driver while a vehicle is being driven.

The DASs can help drivers maintain a current driving lane, provide alarms for lane departure, secure a safe distance from adjacent vehicles, prevent a collision with adjacent obstacles, and control speed depending on traffic situations or road conditions, etc. by utilizing various kinds of cameras, radar sensors, etc. without driver intervention.

DASs have been generally applied to luxury vehicles, but recently, have been extensively applied even to compact and mid-size vehicles because interest in environmentally-friendly economical driving has increased.

For example, the DASs may include systems such as a smart cruise control (SCC) system, a lane departure warning system (LDWS), a blind spot detection (BSD) system, an around view monitoring (AVM) system, a head up display (HUD), and a blind view monitoring (BVM) system.

Meanwhile, the BVM system produces an image of a side and a rear of the vehicle by a plurality of cameras, and the image is displayed through an audio video navigation (AVN).

However, when the AVN provides only one image input terminal, the BVM system requires an additional controller for switching between the multiple images from the plurality of cameras to be displayed. Also, the additional controller must control the on/off status of the cameras and must switch between the multiple images from the plurality of cameras to be provided to the AVN.

Accordingly, because the BVM system requires use of the additional controller for switching between the images, a cost for the system implementation increases.

The above information disclosed in this Background section is only for enhancement of understanding of the background of the invention and therefore it may contain information that does not form the prior art that is already known in this country to a person of ordinary skill in the art.

### SUMMARY

The present invention provides a multiple camera control system selectively displaying the images shot from the plurality of cameras according to condition information of the vehicle and a control method of a multiple camera image output.

A multiple camera control system according to the present invention includes at least two cameras shooting an image outside a vehicle when an ignition of the vehicle is turned on (IG ON) or a shift speed stage of the vehicle is a reverse speed stage; and an image output apparatus receiving the shot image from the at least two cameras and selectively displaying the image received from the cameras according to a traveling direction indication signal of the vehicle and a shift speed stage information of the vehicle.

The at least two cameras may include a side camera shooting and outputting the image of a left side or a right side of the vehicle; and a rear camera shooting and outputting a rear image of the vehicle.

The side camera may shoot and output the image for an ignition on (IG ON) state of the vehicle, but may stop the output of the shot image when a shift speed stage of the vehicle is a reverse speed stage.

The rear camera may shoot and output the image when the shift speed stage of the vehicle is the reverse speed stage.

The image output apparatus may display the image received from the side camera when the traveling direction indication signal of the vehicle is on.

The image output apparatus may display the image received from the rear camera when the shift speed stage is engaged to the reverse speed stage.

The image output apparatus may receive the image signal from the at least two cameras through one image input terminal.

The at least two cameras and the image output apparatus may receive a vehicle control signal from at least one of a transmission control unit (TCU) and a turn signal switch.

The turn signal switch may output the vehicle control signal to the side camera and the image output apparatus when the traveling direction indication signal of the vehicle is on.

The transmission control unit may output the vehicle control signal to the rear camera and the image output apparatus when the shift speed stage of the vehicle is the reverse speed stage.

The image output apparatus may display the image transmitted from the side camera when receiving the vehicle control signal from the turn signal switch and may display the image transmitted from the rear camera when receiving the vehicle control signal from the transmission control unit.

A control method of a multiple camera image output controlling an image shot from a plurality of cameras to be selectively displayed according to the present invention includes: detecting, by a controller, a vehicle condition information; controlling, by the controller, an image shooting and an image output of the plurality of cameras according to the vehicle condition information; and controlling, by the controller, the image received from the cameras to be selectively displayed according to the condition information of the vehicle.

The vehicle condition information may include at least one of: an ignition on (IG ON) state of the vehicle, a shift speed stage information of the vehicle, and a traveling direction indication signal information of the vehicle.

The plurality of cameras may include a side camera shooting and outputting the image of a left side or a right side of the vehicle; and a rear camera shooting and outputting a rear image of the vehicle.

In the step of controlling the image shooting and the image output, the side camera may be controlled to shoot and output the image for an ignition on (IG ON) state of the vehicle, the side camera may be controlled to stop the output of the shot image when the shift speed stage of the vehicle is the reverse speed stage, and the rear camera may be controlled to shoot output the image when the shift speed stage of the vehicle is the reverse speed stage.

In the step of controlling to be selectively displayed, the image received from the side camera may be controlled to be displayed when the traveling direction indication signal of the vehicle is on, and the image received from the rear camera may be controlled to be displayed when the shift speed stage is the reverse speed stage.

A non-transitory computer readable medium containing program instructions executed by a processor includes: program instructions that detect a vehicle condition information; program instructions that control an image shooting and an image output of a plurality of cameras of a multiple camera image output according to the vehicle condition information; and program instructions that control the image received from the cameras to be selectively displayed according to the condition information of the vehicle.

According to the present invention, as the image shot from the plurality of cameras may be received through the AVN having one image input terminal and the image shot from the plurality of cameras may be selectively displayed according to the condition information of the vehicle, the BVM system may be implemented without an additional controller for switching the image, thereby reducing the cost.

Also, as the present invention may display the image of the left side or the right side of the vehicle when the turn signal switch is turned on and may display the rear image of the vehicle when the shift speed stage of the vehicle is engaged to the reverse speed stage, the image outside the vehicle shot from the plurality of cameras may be actively displayed, thereby improving the safety of the driver.

### BRIEF DESCRIPTION OF THE DRAWINGS

FIG. 1 is a block diagram depicting a configuration of a multiple camera control system applied to a vehicle according to an exemplary embodiment of the present invention.
FIG. 2 is a block diagram depicting a configuration of a multiple camera control system applied to a vehicle according to another exemplary embodiment of the present invention.
FIG. 3 is a flowchart of a process by which a multiple camera control system according to an exemplary embodiment of the present invention controls an output of an image shot from a multiple camera according to a vehicle condition information.
FIG. 4 is a flowchart of a process by which a multiple camera control system according to another exemplary embodiment of the present invention controls an output of an image shot from a multiple camera according to a vehicle condition information.

### DETAILED DESCRIPTION OF THE EMBODIMENTS

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

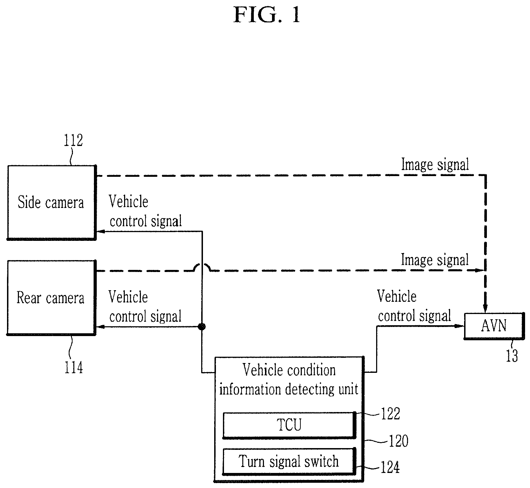

A multiple camera control system and a control method of a multiple camera image output according to an exemplary embodiment of the present invention will be described with reference to FIGS. 1 to 4.

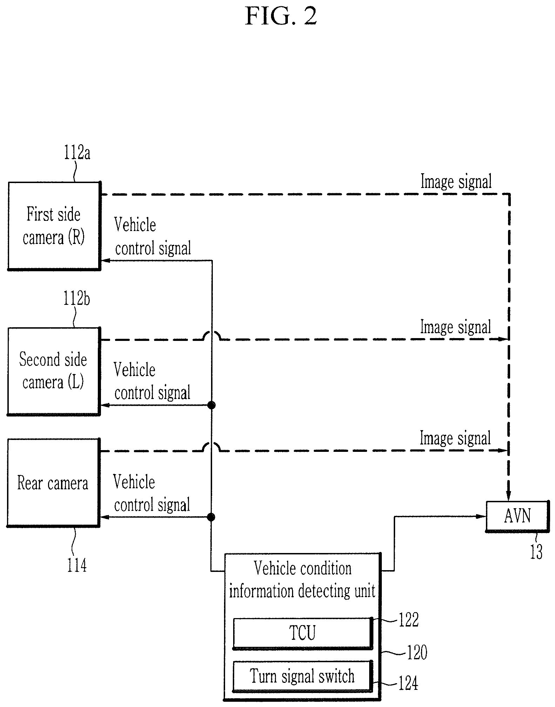

FIG. 1 is a block diagram depicting a configuration of a multiple camera control system applied to a vehicle according to an exemplary embodiment of the present invention, and FIG. 2 is a block diagram depicting a configuration of a multiple camera control system applied to a vehicle according to another exemplary embodiment of the present invention. In this case, the multiple camera control system describes only a schematic configuration necessary for description according to an exemplary embodiment of the present invention, and is not limited to such a configuration.

Referring to FIGS. 1 and 2, the multiple camera control system according to an exemplary embodiment of the present invention includes cameras 112 and 114 shooting an image outside a vehicle and outputting the shot image according to a condition information of the vehicle, a vehicle condition information detection unit 120 (i.e., a controller) detecting the condition information of the vehicle and outputting a vehicle control signal corresponding to the detected condition information, and an image output apparatus 130 controlling to selectively display the image received from the cameras according to the condition information of the vehicle.

The cameras 112 and 114 include a side camera 112 shooting and outputting the image of a right side or a left side of the vehicle and a rear camera 114 outputting the image of a rear of the vehicle. Also, as shown in FIG. 2, the side camera 112 may include a first side camera 112a shooting and outputting the image of the right side of the vehicle according to an exemplary embodiment of the present invention and a second side camera 112b shooting and outputting the image of the left side of the vehicle.

The vehicle condition information detection unit 120 detects the condition information of the vehicle and transmits the vehicle control signal corresponding to the detected condition information to the cameras 112 and 114 and the image output apparatus 130. Here, the condition information of the vehicle includes at least one of: an ignition on (IG ON) state of the vehicle, a shift speed stage information of the vehicle, and a traveling direction indication signal information of the vehicle.

The image output apparatus 130 receives the shot image from the cameras 112 and 114 and selectively displays the image received from the cameras according to the traveling direction indication signal of the vehicle and the shift speed stage information of the vehicle.

Also, the image output apparatus 130 includes one image input terminal, thereby selectively receiving the image signal from the plurality of cameras through one image input terminal. The one image input terminal may be configured to electrically short an image video line. Here, the image output apparatus 130 may be an audio video navigation (AVN) according to an exemplary embodiment of the present invention.

Also, the vehicle condition information detection unit 120 may include a transmission control unit (TCU) 122 and a turn signal switch 124 according to an exemplary embodiment of the present invention.

The transmission control unit 122 outputs the vehicle control signal to the rear camera 114 and the image output apparatus 130 when the shift speed stage of the vehicle is a reverse speed stage (i.e., an "R" stage). Also, the turn signal switch 124 outputs the vehicle control signal to the side camera 112 and the image output apparatus 130 when the traveling direction indication signal of the vehicle is turned on.

In this case, the side camera 112 shoots the image to be output to the image output apparatus 130 in a case of an ignition on (IG ON) state of the vehicle. Also, the side camera 112 stops the output of the shot image when the shift speed stage of the vehicle is the reverse speed stage (the R stage). Also, the rear camera 114 may output the shot image to the image output apparatus 130 when the shift speed stage of the vehicle is the reverse speed stage (the R stage).

Also, the image output apparatus 130 displays the image received from the side camera 112 when receiving the vehicle control signal from the turn signal switch 124. Also, the image output apparatus 130 may display the image transmitted from the rear camera 114 when receiving the vehicle control signal from the transmission control unit 122.

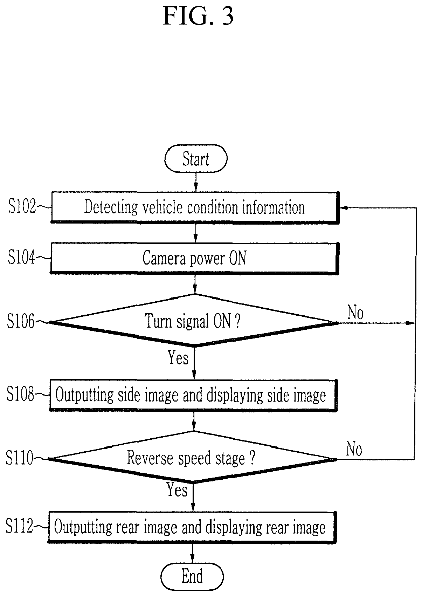

FIG. 3 is a flowchart of a process by which a multiple camera control system according to an exemplary embodiment of the present invention controls an output of an image shot from a multiple camera according to a vehicle condition information. The following flowcharts will be described using the same reference numerals in cooperation with the configuration of FIG. 1.

Referring to FIG. 3, the multiple camera control system according to an exemplary embodiment of the present invention detects the vehicle condition information and supplies the power to the cameras 112 and 114 (S102 and S104). Here, the vehicle condition information may include at least one among the ignition on (IG ON) state of the vehicle, the shift speed stage information of the vehicle, and the traveling direction indication signal information of the vehicle.

Also, the multiple camera control system selectively outputs the image shot by the cameras 112 and 114 based on the vehicle condition information, and controls the image output apparatus 130 to selectively display the image received from the cameras 112 and 114.

For example, when the turn signal is turned on in the multiple camera control system, the turn signal switch 124 outputs the vehicle control signal to the side camera 112 and the image output apparatus 130. In this case, the image output apparatus 130 revives the image signal from the side camera 112 and displays the side image of the vehicle on the screen (S106 and S108).

Also, when the shift speed stage of the vehicle is engaged to the reverse speed stage (the R stage) in the multiple camera control system, the transmission control unit 122 outputs the vehicle control signal to the rear camera 114 and the image output apparatus 130. In this case, the image output apparatus 130 may receive the image signal from the rear camera 114 and may display the rear image of the vehicle on the screen (S110 and S112).

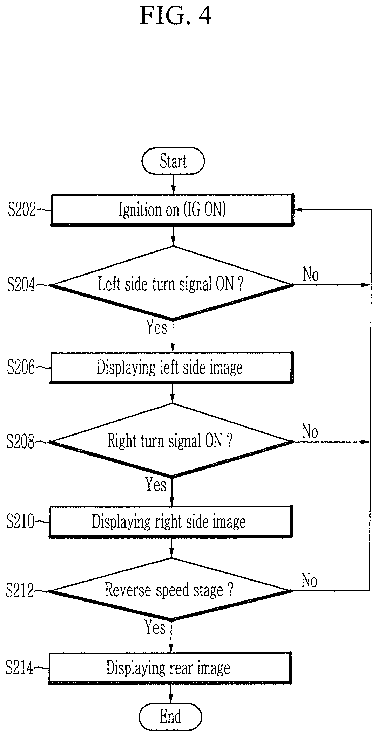

FIG. 4 is a flowchart of a process by which a multiple camera control system according to another exemplary embodiment of the present invention controls an output of an image shot from a multiple camera according to a vehicle condition information. The following flowcharts will be described using the same reference numerals in cooperation with the configuration of FIG. 2.

Referring to FIG. 4, the multiple camera control system according to another exemplary embodiment of the present invention determines whether the ignition is the ON (S1202).

Also, when the left turn signal is turned on, the image output apparatus 130 receives the image of the left side from the second side camera 112b and displays the received image of the left side on the screen (S204 and S206).

Also, when the right turn signal is turned on, the image output apparatus 130 receives the image of the right side from the first side camera 112a and displays the received image of the right side on the screen (S208 and S210).

Also, when the shift speed stage of the vehicle is engaged to the reverse speed stage (the R stage), the image output apparatus 130 may receive the rear image of the vehicle from the rear camera 114 and may display the received rear image on the screen (S212 and S214).

As above-described, as the multiple camera control system in the vehicle and the control method of the multiple camera image output according to an exemplary embodiment of the present invention may receive the image shot from the plurality of cameras through the AVN having one image input terminal and may selectively display the image shot from the plurality of cameras according to the condition information of the vehicle, the BVM system may be implemented without the additional controller for switching the image, thereby reducing the cost.

Also, as the multiple camera control system in the vehicle and the control method of the multiple camera image output according to an exemplary embodiment of the present invention may display the image of the left side or the right side of the vehicle when the turn signal switch is turned on and may display the rear image of the vehicle when the shift speed stage of the vehicle is engaged to the reverse speed stage, the image outside the vehicle shot from the plurality of cameras may be actively displayed, thereby providing an environment securing the safety of the driver.

The exemplary embodiments of the present invention are implemented not only the method and apparatus, but also by programs that achieve functions corresponding to the configuration of the exemplary embodiments of the present invention or recording mediums including the programs. This recording medium may be executed in an user terminal as well as servers.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A multiple camera control system, comprising:
at least two cameras shooting an image outside a vehicle when an ignition of the vehicle is turned on (IG ON) or a shift speed stage of the vehicle is a reverse speed stage; and
an image output apparatus receiving the shot image from the at least two cameras and selectively displaying the image received from the cameras according to a traveling direction indication signal of the vehicle and a shift speed stage information of the vehicle.

2. The multiple camera control system of claim 1, wherein the at least two cameras include:
a side camera shooting and outputting the image of a left side or a right side of the vehicle; and
a rear camera shooting and outputting a rear image of the vehicle.

3. The multiple camera control system of claim 2, wherein:
the side camera shoots and outputs the image for the ignition on state of the vehicle, but stops the output of the shot image when the shift speed stage of the vehicle is the reverse speed stage.

4. The multiple camera control system of claim 2 or 3, wherein:
the rear camera shoots and outputs the image when the shift speed stage of the vehicle is the reverse speed stage.

5. The multiple camera control system of any one of claims 2 to 4, wherein:
the image output apparatus displays the image received from the side camera when the traveling direction indication signal of the vehicle is on.

6. The multiple camera control system of any one of claims 2 to 5, wherein:
the image output apparatus displays the image received from the rear camera when the shift speed stage is engaged to the reverse speed stage.

7. The multiple camera control system of any one of the preceding claims, wherein:
the image output apparatus receives the image signal from the at least two cameras through one image input terminal.

8. The multiple camera control system of any one of the preceding claims, wherein:
the at least two cameras and the image output apparatus receive a vehicle control signal from at least one of a transmission control unit (TCU) and a turn signal switch.

9. The multiple camera control system of claim 8, wherein:
the turn signal switch outputs the vehicle control signal to the side camera and the image output apparatus when the traveling direction indication signal of the vehicle is on.

10. The multiple camera control system of claim 9, wherein:
the transmission control unit outputs the vehicle control signal to the rear camera and the image output apparatus when the shift speed stage of the vehicle is the reverse speed stage.

11. The multiple camera control system of claim 10, wherein:
the image output apparatus displays the image transmitted from the side camera when receiving the vehicle control signal from the turn signal switch and displays the image transmitted from the rear camera when receiving the vehicle control signal from the transmission control unit.

12. A control method of a multiple camera image output controlling an image shot from a plurality of cameras to be selectively displayed, the control method comprising:
detecting, by a controller, a vehicle condition information;
controlling, by the controller, an image shooting and an image output of the plurality of cameras according to the vehicle condition information; and
controlling, by the controller, the image received from the cameras to be selectively displayed according to the condition information of the vehicle.

13. The control method of claim 12, wherein:
the vehicle condition information includes at least one of: an ignition on (IG ON) state of the vehicle, a shift speed stage information of the vehicle, and a traveling direction indication signal information of the vehicle.

14. The control method of claim 12 or 13, wherein the plurality of cameras includes:
a side camera shooting and outputting the image of a left side or a right side of the vehicle; and
a rear camera shooting and outputting a rear image of the vehicle.

15. The control method of claim 14, wherein:
in the step of controlling the image shooting and the image output, the side camera is controlled to shoot and output the image for the ignition on (IG ON) state of the vehicle,
the side camera is controlled to stop the output of the shot image when the shift speed stage of the vehicle is the reverse speed stage, and
the rear camera is controlled to shoot and output the image when the shift speed stage of the vehicle is the reverse speed stage.

16. The control method of claim 14, wherein in the step controlling to be selectively displayed, the image received from the side camera is controlled to be displayed when the traveling direction indication signal of the vehicle is on, and the image received from the rear camera is controlled to be displayed when the shift speed stage is the reverse speed stage.

17. A non-transitory computer readable medium containing program instructions executed by a processor, the computer readable medium comprising:
program instructions that detect a vehicle condition information;
program instructions that control an image shooting and an image output of a plurality of cameras of a multiple camera image output according to the vehicle condition information; and
program instructions that control the image received from the cameras to be selectively displayed according to the condition information of the vehicle.
